# EUROPEAN PATENT SPECIFICATION

(11) **EP 3 884 691 B1**
(45) Date of publication and mention of the grant of the patent: **11.10.2023**
(21) Application number: 19886819.2
(22) Date of filing: 15.11.2019
(51) Int. Cl.: H04W 8/22, H04L 65/1069, H04L 65/1016, H04L 65/80, H04L 65/1073, H04W 60/00, H04W 8/24

(54) **NETWORK NODE, RADIO NETWORK NODE, AND METHODS FOR VOICE MATCH SUPPORT**
NETZWERKKNOTEN, FUNKNETZWERKKNOTEN UND VERFAHREN ZUR SPRACHÜBEREINSTIMMUNGSUNTERSTÜTZUNG
NOEUD DE RÉSEAU, NOEUD DE RÉSEAU RADIO ET PROCÉDÉS DE PRISE EN CHARGE DE LA RECONNAISSANCE VOCALE

(30) Priority: 19.11.2018 US 201862769017 P
(43) Date of publication of application: 29.09.2021
(73) Proprietor: TELEFONAKTIEBOLAGET LM ERICSSON (PUBL), 164 83 Stockholm (SE)
(72) Inventor: ABTIN, Afshin, 191 38 Sollentuna (SE); GUSTAFSSON, Christer, 141 31 Huddinge (SE); KELLER, Ralf, 52146 Würselen (DE); RAMLE, Peter, 435 31 Mölnlycke (SE)
(74) Representative: Ericsson
(86) International application number: PCT/SE2019/051160
(87) International publication number: WO 2020/106203

(56) References cited:
- EP-A1- 2 819 441
- Anonymous: "3rd Generation Partnership Project; Technical Specification Group Services and System Aspects; Procedures for the 5G System; Stage 2 (Release 15)", 3GPP Standard; Technical Specification; 3GPP TS 23.502, no. V15.3.0, 17 September 2018 (2018-09-17), pages 1-330, XP051487017,
- Ericsson: "Alignment with RAN and CT1 on fetching of UE Radio Capability and handling of S1AP Connection Establishment Indication", 3GPP Draft; S2-182242_DP_CIoTattach_UERadioCapConEstab lishInd, vol. SA WG2, 20 February 2018 (2018-02-20) , pages 21-6, XP051408766,
- Anonymous: "3rd Generation Partnership Project; Technical Specification Group Services and System Aspects; Study on optimisations of UE radio capability signalling (Release 16)", 3GPP Standard; Technical Report; 3GPP TR 23.743, no. V0.3.0, 31 October 2018 (2018-10-31), pages 1-43, XP051487714,
- Nokia, Nokia Shanghai Bell: "Discussions on UE radio capability handling", 3GPP Draft; R3-173540 UE Radio Capability, vol. RAN WG3, 9 October 2017 (2017-10-09), pages 1-5, XP051343967, Prague, Czech Republic

## Description

### TECHNICAL FIELD

Embodiments herein relate to a network node, a radio network node and methods performed therein for communication. Furthermore, a computer program product and a computer readable storage medium are also provided herein. In particular, embodiments herein relate to communicating within a wireless communication network.

### BACKGROUND

In a typical wireless communication network, User equipments (UE), also known as wireless communication devices, mobile stations, stations (STA) and/or wireless devices, communicate via a Radio Access Network (RAN) to one or more core networks (CN). The RAN covers a geographical area which is divided into service areas or cell areas, with each service area or cell area being served by a radio network node such as a radio access node e.g., a Wi-Fi access point or a radio base station (RBS), which in some networks may also be denoted, for example, a NodeB, an eNodeB, or a gNodeB. A service area or cell area is a geographical area where radio coverage is provided by the radio network node. The radio network node communicates over an air interface operating on radio frequencies with the UE within range of the radio network node.

A Universal Mobile Telecommunications System (UMTS) is a third generation (3G) telecommunication network, which evolved from the second generation (2G) Global System for Mobile Communications (GSM). The UMTS terrestrial radio access network (UTRAN) is essentially a RAN using wideband code division multiple access (WCDMA) and/or High Speed Packet Access (HSPA) for user equipments. In a forum known as the Third Generation Partnership Project (3GPP), telecommunications suppliers propose and agree upon standards for third generation networks, and investigate enhanced data rate and radio capacity. In some RANs, e.g. as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. This type of connection is sometimes referred to as a backhaul connection. The RNCs and BSCs are typically connected to one or more core networks.

Specifications for the Evolved Packet System (EPS), also called a Fourth Generation (4G) network, have been completed within the 3^{rd} Generation Partnership Project (3GPP) and this work continues in the coming 3GPP releases, for example to specify a Fifth Generation (5G) network also known as new radio (NR). The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs. In general, in E-UTRAN/LTE the functions of an RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface.

UEs of 5G may be voice centric devices and similar to Voice over LTE (VoLTE) UEs, the UEs may require receiving an IMS Voice over Packet Switched Support Indication from the core network to camp on 5G NR and/or 5G core network (5GC). Packet Switched herein meaning that the voice audio is converted into small units of data called packets, which are routed through a network based on the destination address contained within each packet. Using IMS Voice over Packet Switched Support Indication is standardized and deployed for VoLTE and also applicable to 5G UEs per 3GPP specifications. Such UE not receiving the mentioned indication would not camp on 5G and reselect to another radio access technology (RAT) e.g. LTE.

Voice over 5G (NR/5GC) may be provided natively or via EPS fallback procedures where during the quality of service (QoS) flow resource reservation, the UE handling will be transferred, e.g. using inter radio access technology (IRAT) handover (HO) i.e. handover between different RATs, to EPS. This is further described in 23.502, section 4.13.6.1 'EPS fallback for IMS voice'.

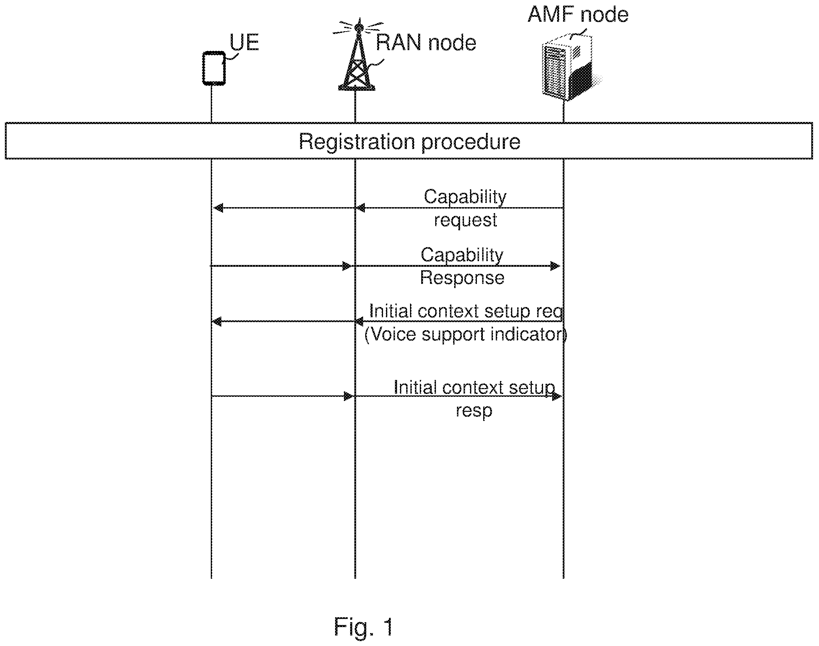

**Fig. 1** is a schematic overview depicting a signalling scheme according to a standardized solution. After initiating a registrations procedure for the UE, an Access and Mobility Management Function (AMF) node transmits a capability request to the RAN node. The RAN node fetches capability of the UE and determines a capability of the RAN. The RAN node further transmits a capability response to the AMF node. This capability response may comprise a voice support match indicator. The AMF node may then transmit initial context setup request comprising a voice support indicator. The RAN node may then transmit an initial context setup response back to the AMF node.

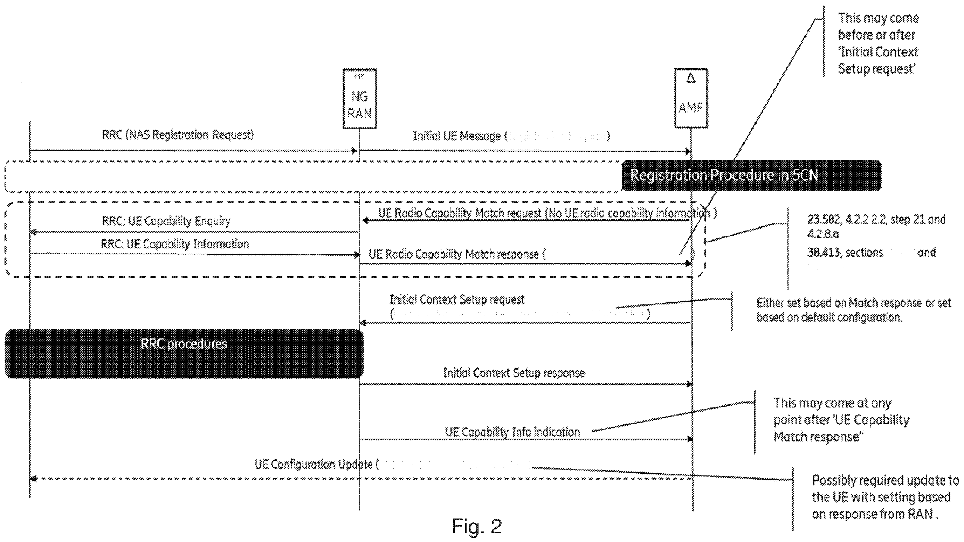

**Fig. 2** shows in more detail a Call flow and procedure for 5GC Registration. A network node such as an Access and Mobility Management Function (AMF) node may perform the "UE Radio Capability Match" procedure per 3GPP TS 23.502, section 4.2.8a to receive the "Voice Support Match Indicator" from RAN node wherein the UE capability is retrieved from the UE. This indication instructs the AMF node to set the "Voice over PS Supported" indication to Supported or Not Supported towards the UE in the Registration Accept. In this procedure the radio network node will consider UE capabilities, but also RAN capabilities and operator policies indicating the support for IMS Voice in the network.

Additionally, the radio network node will also provide UE radio capability information in the "UE Capability Info indication" IE. The latter is based on the Enquiry procedure (NG-RAN <-> UE).

The "UE Capability Info indication" is always sent from the radio network node after "Initial Context Setup" (Registration Accept from AMF to UE). When the UE receives the "Voice over PS Supported indication" in the Registration Accept message from AMF, the voice centric UE would set up an IMS protocol data unit (PDU) session (3GPP TS 23.502).

The above described process may generate a large amount of signalling and that may reduce or limit performance of the wireless communication network at least in the RAN.

EP2819441 relates to a method for supporting a voice service for a network terminal in a wireless communication system. The method includes transmitting an update location request (ULR) message to a home subscriber server (HSS) by a serving node, wherein if the serving node may not evaluate an IP multimedia subsystem (IMS) voice over PS session-supported indication value for the terminal, the ULR has no information on homogeneous support of IMS voice in a PS session.

### SUMMARY

An object of embodiments herein is to provide a mechanism for improving performance of the wireless communication network in an efficient manner when handling communication such as voice traffic.

According to an aspect the object may be achieved by a method performed by a network node for handling communication of a UE in a wireless communication network. The network node transmits to a radio network node, a first message for setting up context of the UE, wherein the first message comprises a request indicator, and wherein the request indicator requests a voice match response from the radio network node indicating whether voice over packet switched is supported or not by the UE and/or the radio network node. Furthermore, the network node receives from the radio network node, a second message for indicating a capability of the UE, wherein the second message comprises a support indication indicating whether voice over packet switched is supported or not by the UE and/or the radio network node.

According to another aspect the object may be achieved by a method performed by a radio network node for handling communication of a UE in a wireless communication network. The radio network node receives from a network node, a first message for setting up context of the UE, wherein the first message comprises a request indicator, and wherein the request indicator requests a voice match response from the radio network node indicating whether voice over packet switched is supported or not by the UE and/or the radio network node. The radio network node transmits to the network node, a second message for indicating a capability of the UE, wherein the second message comprises a support indication indicating whether voice over packet switched is supported or not by the UE and/or the radio network node.

According to yet another aspect the object may be achieved by providing a network node for handling communication of a UE in a wireless communication network. The network node is configured to transmit to a radio network node, a first message for setting up context of the UE, wherein the first message comprises a request indicator, and wherein the request indicator requests a voice match response from the radio network node indicating whether voice over packet switched is supported or not by the UE and/or the radio network node. The network node is further configured to receive from the radio network node, a second message for indicating a capability of the UE, wherein the second message comprises a support indication indicating whether voice over packet switched is supported or not by the UE and/or the radio network node.

According to still another aspect the object may be achieved by providing a radio network node for handling communication of a UE in a wireless communication network. The radio network node is configured to receive from a network node, a first message for setting up context of the UE, wherein the first message comprises a request indicator, and wherein the request indicator requests a voice match response from the radio network node indicating whether voice over packet switched is supported or not by the UE and/or the radio network node. The radio network node is further configured to transmit to the network node, a second message for indicating a capability of the UE, wherein the second message comprises a support indication indicating whether voice over packet switched is supported or not by the UE and/or the radio network node.

Thus, the radio network node includes the support indication, e.g. a Voice Support match Indicator, in a UE Capability Info indication information element to enable optimization and flexibility in a registration procedure since the information whether voice over packet switched is supported or not by the UE and/or the radio network node is efficiently communicated. The information sent from the radio network node to the network node may be granular i.e. in levels indicating different levels of support such as: only voice supported i.e. IMS Emergency calls not supported; voice and emergency calls supported; and neither voice nor emergency calls supported. The radio network node may further receive the first message indicating e.g. initial context setup from the network node to indicate if voice support e.g. a IMS Voice Match Indicator is requested. Thus, embodiments herein avoid the UE Capability Match procedure, described above, resulting in less signalling, and embodiments herein thus enable the radio network node to provide indication of voice over packet switched support in an efficient manner leading to an improved performance of the wireless communication network.

### BRIEF DESCRIPTION OF THE DRAWINGS

Embodiments will now be described in more detail in relation to the enclosed drawings, in which:
- Fig. 1: is capability retrieval according to prior art;
- Fig. 2: is capability retrieval according to prior art;
- Fig. 3: is a schematic overview depicting a wireless communication network according to embodiments herein;
- Fig. 4: is a combined flowchart and signalling scheme according to embodiments herein;
- Fig. 5: is a schematic flowchart depicting a method performed by a network node according to embodiments herein;
- Fig. 6: is a schematic flowchart depicting a method performed by a radio network node according to embodiments herein;
- Fig. 7: is a combined flowchart and signalling scheme according to embodiments herein;
- Fig. 8: is a block diagram depicting a network node according to embodiments herein; and
- Fig. 9: is a block diagram depicting a radio network node according to embodiments herein;
- Fig. 10: shows a telecommunication network connected via an intermediate network to a host computer in accordance with some embodiments;
- Fig. 11: shows a host computer communicating via a base station with a user equipment over a partially wireless connection in accordance with some embodiments;
- Fig. 12: shows methods implemented in a communication system including a host computer, a base station and a user equipment in accordance with some embodiments;
- Fig. 13: shows methods implemented in a communication system including a host computer, a base station and a user equipment in accordance with some embodiments;
- Fig. 14: shows methods implemented in a communication system including a host computer, a base station and a user equipment in accordance with some embodiments; and
- Fig. 15: shows methods implemented in a communication system including a host computer, a base station and a user equipment in accordance with some embodiments.

### DETAILED DESCRIPTION

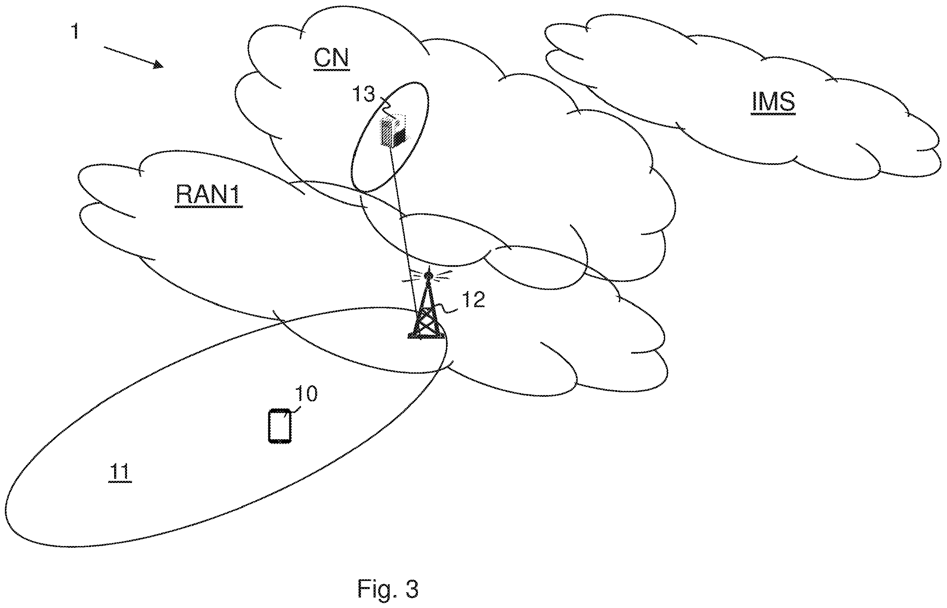

Embodiments herein relate to communication networks in general. **Fig. 3** is a schematic overview depicting **a communication network 1.** The communication network 1 comprises one or more RANs e.g. a first RAN (RAN1), connected to one or more CNs. The communication network 1 may use a number of different technologies, such as Wi-Fi, Long Term Evolution (LTE), LTE-Advanced, 5G, Wideband Code Division Multiple Access (WCDMA), Global System for Mobile communications/Enhanced Data rate for GSM Evolution (GSM/EDGE), Worldwide Interoperability for Microwave Access (WiMax), or Ultra Mobile Broadband (UMB), just to mention a few possible implementations. Embodiments herein relate to recent technology trends that are of particular interest in a 5G context, however, embodiments are applicable also in further development of the existing communication systems such as e.g. 3G and LTE.

In the communication network 1, UEs e.g. **a UE 10** such as a mobile station, a non-access point (non-AP) station (STA), a STA, a wireless device and/or a wireless terminal, are connected via the one or more RANs, to the one or more CNs. It should be understood by those skilled in the art that "UE" is a non-limiting term which means any terminal, wireless communication terminal, user equipment, Machine Type Communication (MTC) device, Internet of Things (IoT) operable device, Device to Device (D2D) terminal, mobile device e.g. smart phone, laptop, mobile phone, sensor, relay, mobile tablets or any device communicating within a cell or service area.

The communication network 1 comprises **a radio network node 12** providing radio coverage over a geographical area, **a service area 11** or a cell, of a first radio access technology (RAT), such as New Radio (NR), LTE, UMTS, Wi-Fi or similar. The radio network node 12 may be a radio access network node such as radio network controller or an access point such as a wireless local area network (WLAN) access point or an Access Point Station (AP STA), an access controller, a base station, e.g. a radio base station such as a NodeB, an evolved Node B (eNB, eNodeB), a gNodeB, a base transceiver station, Access Point Base Station, base station router, a transmission arrangement of a radio base station, a stand-alone access point or any other network unit capable of serving a UE within the service area served by the radio network node 12 depending e.g. on the first radio access technology and terminology used.

The communication network 1 further comprises **a network node 13** such as a RAN node and/or a core network node e.g. Radio Software Defined Networking (SDN) node, an AMF node, an mobility management entity (MME), a serving gateway (S-GW), a Serving GPRS Support Nodes (SGSN) node, or corresponding node in e.g. a 5G network or similar. The GPRS meaning General Packet Radio Services.

According to embodiments the network node 13 transmits to the radio network node 12, a first message for setting up context of the UE 10, wherein the first message comprises a request indicator. The request indicator requests a voice match response from the radio network node 12 indicating whether voice over packet switched is supported or not by the UE 10 and/or the radio network node 12. The network node 13 further receives from the radio network node 12, a second message for indicating a capability of the UE 10. The second message comprises a support indication indicating whether voice over packet switched is supported or not by the UE 10 and/or the radio network node 12. E.g. the radio network node 12 includes a "Voice Support Match Indicator" as the support indication in UE Capability Info indication to the network node 13. The network node 13 such as an AMF node may not need to perform the "UE Radio Capability Match" but could indicate to the radio network node 12 that the network node 13 is requesting the voice match support info in e.g. an Initial Context Setup request. This may be optional in 3GPP. The following information element may be extended to include the support indication indicating e.g. "normal voice calls supported", "normal voice and emergency voice calls supported" or "neither voice nor emergency calls supported" to enable differentiation between IMS Voice calls vs. IMS Emergency voice calls e.g. if there is a separate indication from network node 13 to UE 10 for IMS Emergency call support.

The support indication such as an IMS Voice Support Indicator may be set by the radio network node 12, such as a NG-RAN node, to indicate whether the UE radio capabilities are compatible with the network configuration for IMS voice.

| **IE/Group Name** | **Presence** | **Range** | **IE type and reference** | **Semantics** description |
|---|---|---|---|---|
| IMS Voice Support Indicator | M | | ENUMERATED (Supported, Not Supported, ...) | |

Embodiments herein may improve the procedures which enable a voice centric UE to camp on NR/5G-RAN if there is no support or no capacity for voice calls by triggering handover (fallback) to underlying LTE which is already quality of service (QoS) enabled for voice during call setup (or vice versa).

Embodiments herein may enable the radio network node 12 to distinguish the support indication of support level between normal voice call and emergency voice call, based e.g. on radio conditions known only to the RAN.

Embodiments herein may provide an opportunity to reduce the amount of signalling between the UE 10 and radio network node 12 and between radio network node 12 and the network node 13.

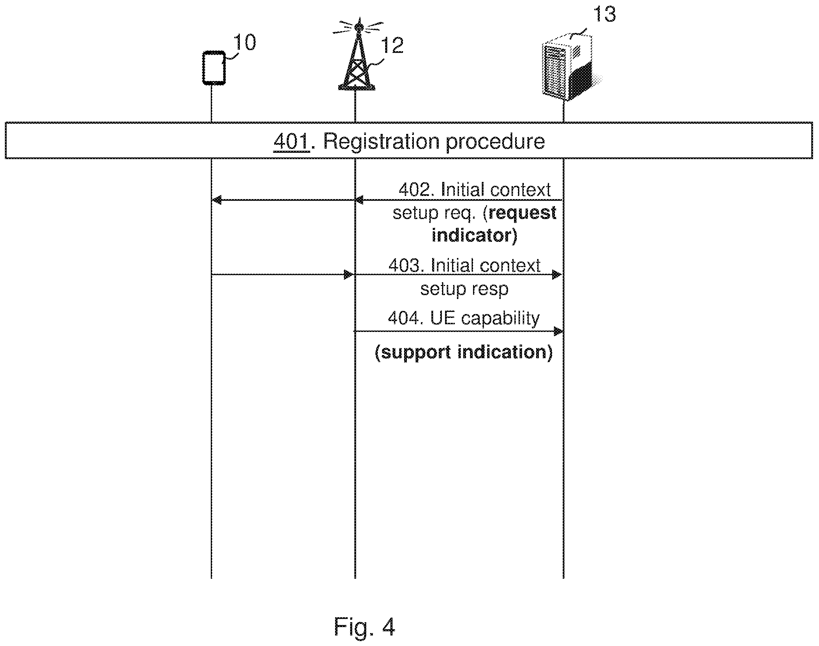

**Fig. 4** is a combined flowchart and signalling scheme according to embodiments herein.

**Action 401.** A registration procedure is performed for the UE 10.

**Action 402.** The network node 13 transmits a capability request message such as an Initial Context Setup request comprising the request indicator. The network node 13 may piggyback a voice match request indication to a registration accept message. Piggyback means that the network node uses an already existing and/or included information elements in the message or adding an information element to the message.

**Action 403.** The radio network node 12 may then e.g. after performing radio resource control (RRC) procedures for the UE 10, transmit a context response such as an initial context setup response back to the network node 13.

**Action 404.** The radio network node 12 further transmits the UE capability info to the network node 13 in response to the piggybacked voice match request indicator. The UE capability info comprises the support indication.

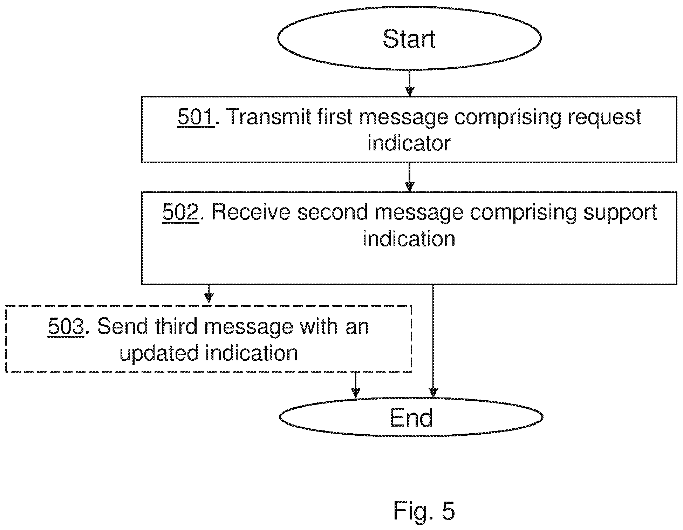

The method actions performed by the network node 13 for handling communication of the UE 10 in the wireless communication network 1 according to embodiments will now be described with reference to a flowchart depicted in **Fig. 5****.** Actions performed in some embodiments are marked with dashed boxes.

**Action 501.** The network node 13 transmits to the radio network node 12 the first message for setting up context of the UE 10. The first message comprises the request indicator, and wherein the request indicator requests a voice match response from the radio network node 12 indicating whether voice over packet switched is supported or not by the UE 10 and/or the radio network node 12. The request indicator may be a voice match request indication and the first message may be an initial context setup request message further comprising an IMS voice over packet switched supported indication.

**Action 502.** The network node 13 receives from the radio network node 12, the second message for indicating a capability of the UE 10. The second message comprises the support indication indicating whether voice over packet switched is supported or not by the UE 10 and/or the radio network node 12. In this procedure the radio network node 12 may consider UE capabilities, but also RAN capabilities and operator policies indicating the support for IMS Voice in the network. The support indication may be a level indication defining different levels of voice call and/or emergency call support, e.g. only voice supported i.e. IMS Emergency calls not supported; voice and emergency calls supported; and neither voice nor emergency calls supported. The support indication may be the voice support match indicator, e.g. 1 or 2 bits, and the second message may be a UE capability info indication message. The request indicator may be piggybacked to the first message and/or the support indication may be piggybacked to the second message.

**Action 503.** The network node 13 may further send a third message to the UE 10 with an updated indication, wherein the updated indication indicates whether communication supports voice over packet switched or not, determined based on the received support indication. The third message may be a UE configuration update message.

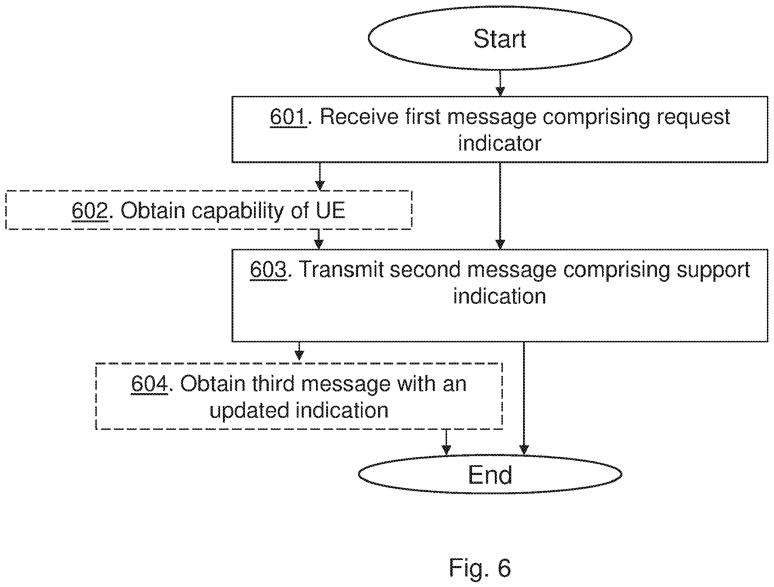

The method actions performed by the radio network node 12 for handling communication of the UE 10 in the wireless communication network 1 according to embodiments will now be described with reference to a flowchart depicted in **Fig. 6****.** The actions do not have to be taken in the order stated below, but may be taken in any suitable order. Actions performed in some embodiments are marked with dashed boxes.

**Action 601.** The radio network node 12 receives from the network node 13, the first message for setting up context of the UE 10. The first message comprises the request indicator, and wherein the request indicator requests a voice match response from the radio network node 12 indicating whether voice over packet switched is supported or not by the UE 10 and/or the radio network node 12. The request indicator may be a voice match request indication and the first message may be an initial context setup request message further comprising an IMS voice over packet switched supported indication.

**Action 602.** The radio network node 12 may obtain a capability of the UE 10 from the UE 10, wherein the obtained capability and a capability of the radio network node 12 may be taken into account when setting the support indication in the second message.

**Action 603.** The radio network node 12 further transmits to the network node 13, the second message for indicating the capability of the UE 10. The second message comprises the support indication indicating whether voice over packet switched is supported or not by the UE 10 and/or the radio network node 12. The support indication is a level indication defining different levels of voice call and/or emergency call support. The support indication may be a voice support match indicator and the second message may be a UE capability info indication message. The request indicator may be piggybacked to the first message and/or the support indication may be piggybacked to the second message. The transmission of the second message may be initiated by receiving the first message.

**Action 604.** The radio network node 12 may obtain the third message intended for the UE 10 with the updated indication, wherein the updated indication indicates whether communication supports voice over packet switched or not. The radio network node 12 may forward transparently the third message to the UE 10.

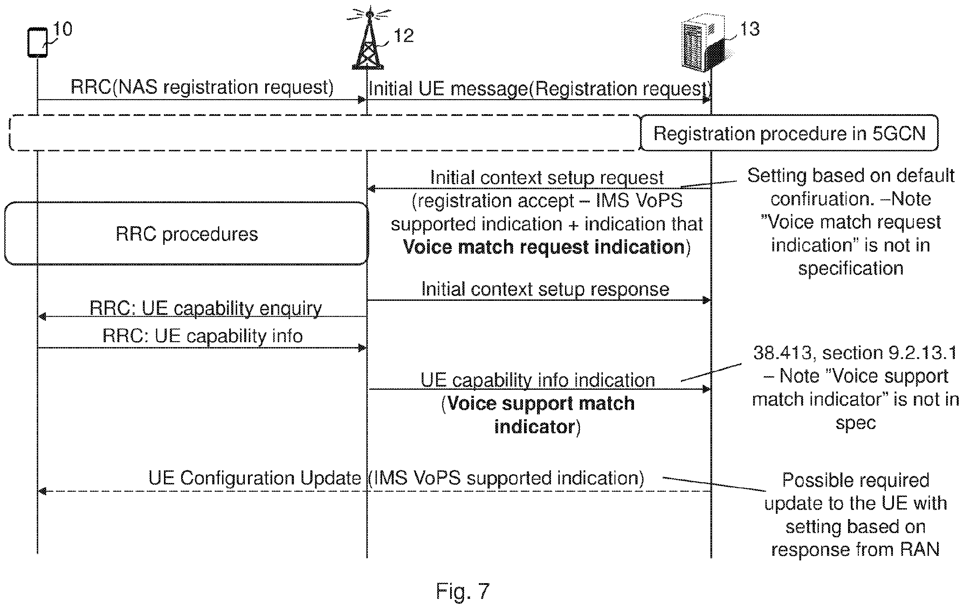

**Fig.** 7 shows a combined signalling scheme and flowchart depicting a solution according to some embodiments herein.

The UE 10 transmits a RRC registration e.g. transmits a NAS registration request to the NG-RAN, i.e. the radio network node 12, and the NG-RAN sends an initial UE message such as a registration request to the network node 13 such as an AMF node.

A following registration procedure e.g. in 5CN is then performed.

The network node 13 transmits an initial context setup request, e.g. a registration accept with an IMS VoPS supported indication and the request indicator such as an indication that voice match response is requested. Setting of the IMS VoPS supported indication may be a default setting based on a default configuration.

RRC procedures are performed between the radio network node 12 and the UE 10.

The radio network node 12 may then transmit an initial context setup response to the network node 13.

The radio network node 12 may further fetch UE capability by transmitting an RRC message e.g. UE capability enquiry and receiving an RRC message e.g. UE capability information from the UE 10.

According to embodiments herein the radio network node 12 then transmits a UE capability info indication with a voice support match indication (i.e. the support indication) to the network node 13.

The network node 13 may then update its IMS VoPS supported indication based on the received support indication. The network node 13 may then send a UE configuration update (third message) with the updated IMS VoPS supported indication.

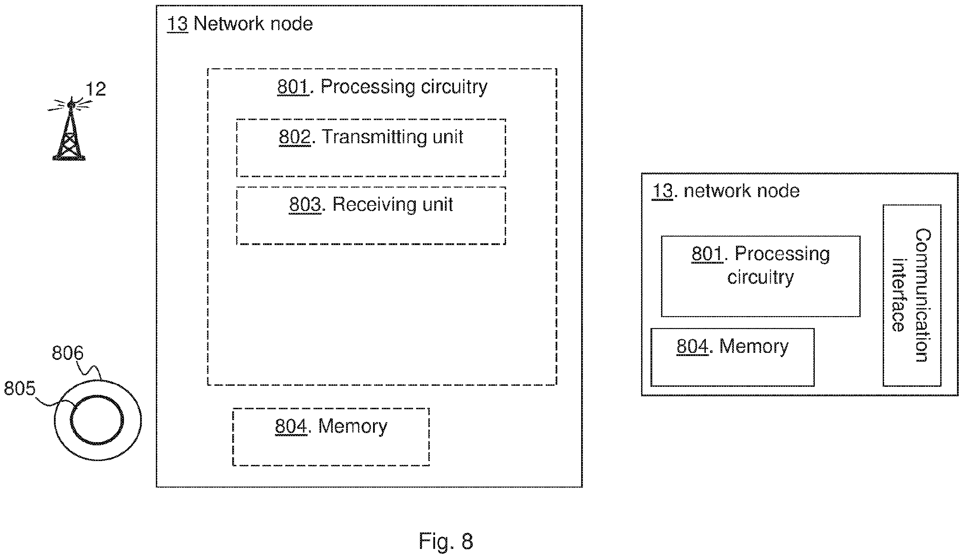

**Fig. 8** is a block diagram depicting the network node 13 for handling communication of the UE 10 in the wireless communication according to embodiments herein.

The network node 13 may comprise **processing circuitry 801,** such as one or more processors, configured to perform methods herein.

The network node 13 may comprise **a transmitting unit 802,** e.g. a transmitter or transceiver. The network node 13, the processing circuitry 801, and/or the transmitting unit 802 is configured to transmit to the radio network node 12, the first message for setting up context of the UE, wherein the first message comprises the request indicator. The request indicator requests a voice match response from the radio network node 12 indicating whether voice over packet switched is supported or not by the UE 10 and/or the radio network node 12. The request indicator may be the voice match request indication and the first message may be the initial context setup request message, which further comprises an IMS voice over packet switched supported indication.

The network node 13 may comprise **a receiving unit 803,** e.g. a receiver or transceiver. The network node 13, the processing circuitry 801, and/or the receiving unit 803 is configured to receive from the radio network node 12, the second message for indicating the capability of the UE 10, wherein the second message comprises the support indication indicating whether voice over packet switched is supported or not by the UE 10 and/or the radio network node 12. The support indication may be a level indication defining different levels of voice call and/or emergency call support. The support indication may be the voice support match indicator and the second message may be the UE capability info indication message. The request indicator may be piggybacked to the first message and/or the support indication may be piggybacked to the second message.

The network node 13, the processing circuitry 801, and/or the transmitting unit 802 may be configured to send the third message to the UE 10 with the updated indication, wherein the updated indication indicates whether communication supports voice over packet switched or not, determined based on the received support indication.

The network node 13 further comprises **a memory 804.** The memory comprises one or more units to be used to store data on, such as request indicators, support indications, indications, voice support, messages, applications to perform the methods disclosed herein when being executed, and similar. The network node 13 may comprise a communication interface comprising e.g. a receiver, a transmitter, and/or a transceiver.

The methods according to the embodiments described herein for the network node 13 are respectively implemented by means of e.g. **a computer program product 805** or a computer program, comprising instructions, i.e., software code portions, which, when executed on at least one processor, cause the at least one processor to carry out the actions described herein, as performed by the network node 13. The computer program product 805 may be stored on **a computer-readable storage medium 806,** e.g. a disc, a universal serial bus (USB) stick or similar. The computer-readable storage medium 806, having stored thereon the computer program product, may comprise the instructions which, when executed on at least one processor, cause the at least one processor to carry out the actions described herein, as performed by the network node 13. In some embodiments, the computer-readable storage medium may be a transitory or a non-transitory computer-readable storage medium.

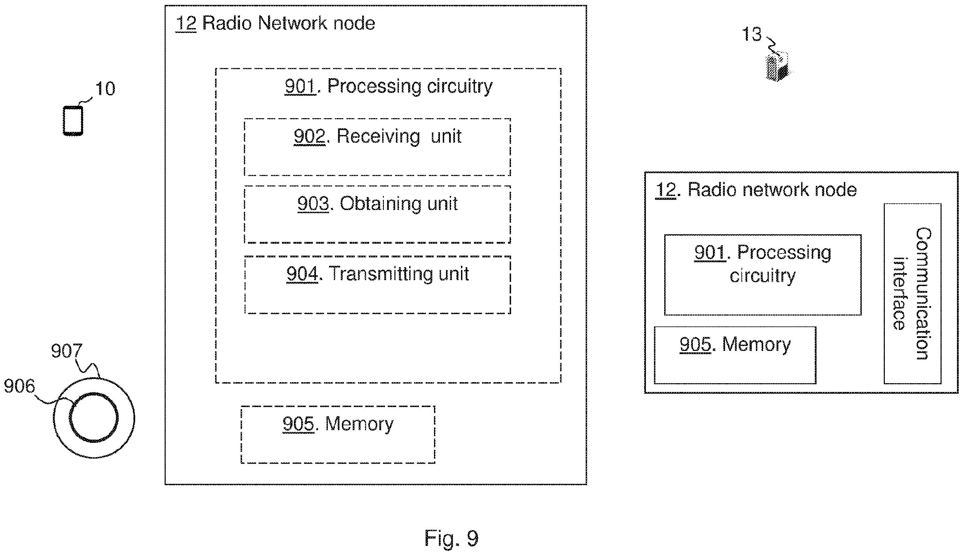

**Fig. 9** is a block diagram depicting the radio network node 12 for handling communication of the UE 10 in the wireless communication network according to embodiments herein.

The radio network node 12 may comprise **processing circuitry 901,** e.g. one or more processors, configured to perform the methods herein.

The radio network node 12 may comprise **a receiving unit 902,** e.g. receiver or transceiver. The radio network node 12, the processing circuitry 901, and/or the receiving unit 902 is configured to receive from the network node 13, the first message for setting up context of the UE 10, wherein the first message comprises the request indicator. The request indicator requests a voice match response from the radio network node 12 indicating whether voice over packet switched is supported or not by the UE 10 and/or the radio network node 12. The request indicator may be a voice match request indication and the first message may be an initial context setup request message further comprising an IMS voice over packet switched supported indication.

The radio network node 12 may comprise **an obtaining unit 903.** The radio network node 12, the processing circuitry 901, and/or the obtaining unit 903 may be configured to obtain the capability of the UE 10 from the UE 10, wherein the obtained capability and a capability of the radio network node 12 is taken into account when setting the support indication in the second message.

The radio network node 12 may comprise **a transmitting unit 904,** e.g. transmitter or transceiver. The radio network node 12, the processing circuitry 901, and/or the transmitting unit 904 is configured to transmit to the network node 13, the second message for indicating the capability of the UE 10, wherein the second message comprises the support indication indicating whether voice over packet switched is supported or not by the UE 10 and/or the radio network node 12. The support indication may be a level indication defining different levels of voice call and/or emergency call support. The support indication may be a voice support match indicator and the second message may be a UE capability info indication message. The transmission of the second message may be initiated, i.e. triggered, by receiving the first message e.g. in response to receiving the first message.

The request indicator may be piggybacked to the first message and/or the support indication may be piggybacked to the second message.

The radio network node 12, the processing circuitry 901, and/or the obtaining unit 903 may be configured to obtain the third message intended for the UE 10 with the updated indication, wherein the updated indication indicates whether communication supports voice over packet switched or not.

The radio network node 12 further comprises **a memory 905.** The memory comprises one or more units to be used to store data on, such as request indicators, support indications, indications, UE capability, voice over packet switched support indications, applications to perform the methods disclosed herein when being executed, and similar. The radio network node 12 may comprise a communication interface comprising e.g. a receiver, a transmitter, a transceiver and/or one or more antennas.

The methods according to the embodiments described herein for the radio network node 12 are respectively implemented by means of e.g. a **computer program product 906** or a computer program, comprising instructions, i.e., software code portions, which, when executed on at least one processor, cause the at least one processor to carry out the actions described herein, as performed by the radio network node 12. The computer program product 906 may be stored on a **computer-readable storage medium 907,** e.g. a disc, a universal serial bus (USB) stick or similar. The computer-readable storage medium 907, having stored thereon the computer program product, may comprise the instructions which, when executed on at least one processor, cause the at least one processor to carry out the actions described herein, as performed by the radio network node 12. In some embodiments, the computer-readable storage medium may be a transitory or a non-transitory computer-readable storage medium.

In some embodiments a more general term "radio network node" is used and it can correspond to any type of radio-network node or any network node, which communicates with a wireless device and/or with another network node. Examples of network nodes are NodeB, MeNB, SeNB, a network node belonging to Master cell group (MCG) or Secondary cell group (SCG), base station (BS), multi-standard radio (MSR) radio node such as MSR BS, eNodeB, network controller, radio-network controller (RNC), base station controller (BSC), relay, donor node controlling relay, base transceiver station (BTS), access point (AP), transmission points, transmission nodes, Remote radio Unit (RRU), Remote Radio Head (RRH), nodes in distributed antenna system (DAS), etc.

In some embodiments the non-limiting term wireless device or user equipment (UE) is used and it refers to any type of wireless device communicating with a network node and/or with another wireless device in a cellular or mobile communication system. Examples of UE are target device, device to device (D2D) UE, proximity capable UE (aka ProSe UE), machine type UE or UE capable of machine to machine (M2M) communication, Tablet, mobile terminals, smart phone, laptop embedded equipped (LEE), laptop mounted equipment (LME), USB dongles etc.

Embodiments are applicable to any RAT or multi-RAT systems, where the wireless device receives and/or transmit signals (e.g. data) e.g. New Radio (NR), Wi-Fi, Long Term Evolution (LTE), LTE-Advanced, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

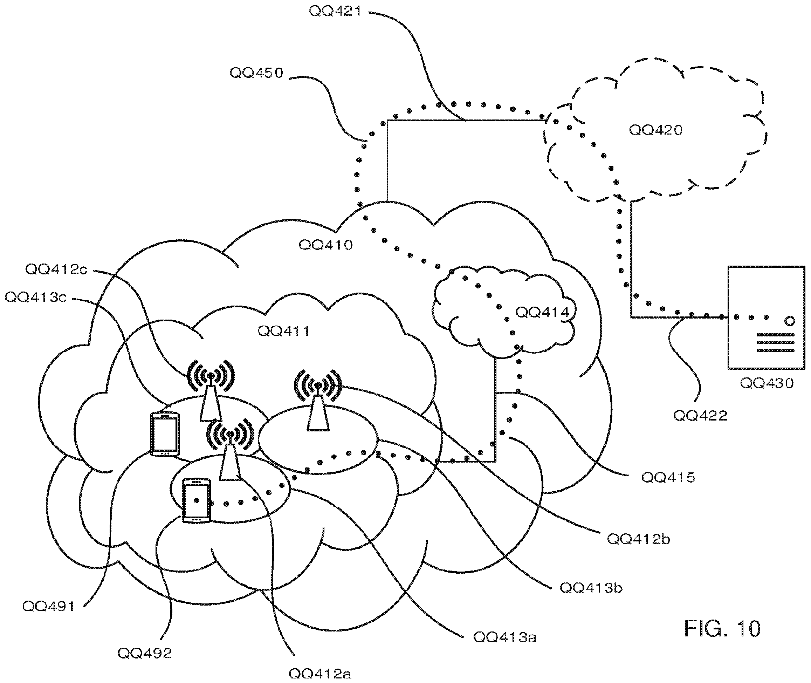

**Figure** 10: Telecommunication network connected via an intermediate network to a host computer in accordance with some embodiments

With reference to Figure 10, in accordance with an embodiment, a communication system includes telecommunication network QQ410, such as a 3GPP-type cellular network, which comprises access network QQ411, such as a radio access network, and core network QQ414. Access network QQ411 comprises a plurality of base stations QQ412a, QQ412b, QQ412c, such as NBs, eNBs, gNBs or other types of wireless access points being examples of the radio network node 12 above, each defining a corresponding coverage area QQ413a, QQ413b, QQ413c. Each base station QQ412a, QQ412b, QQ412c is connectable to core network QQ414 over a wired or wireless connection QQ415. A first UE QQ491 located in coverage area QQ413c is configured to wirelessly connect to, or be paged by, the corresponding base station QQ412c. A second UE QQ492 in coverage area QQ413a is wirelessly connectable to the corresponding base station QQ412a. While a plurality of UEs QQ491, QQ492 are illustrated in this example being examples of the wireless device 10 above, the disclosed embodiments are equally applicable to a situation where a sole UE is in the coverage area or where a sole UE is connecting to the corresponding base station QQ412.

Telecommunication network QQ410 is itself connected to host computer QQ430, which may be embodied in the hardware and/or software of a standalone server, a cloud-implemented server, a distributed server or as processing resources in a server farm. Host computer QQ430 may be under the ownership or control of a service provider, or may be operated by the service provider or on behalf of the service provider. Connections QQ421 and QQ422 between telecommunication network QQ410 and host computer QQ430 may extend directly from core network QQ414 to host computer QQ430 or may go via an optional intermediate network QQ420. Intermediate network QQ420 may be one of, or a combination of more than one of, a public, private or hosted network; intermediate network QQ420, if any, may be a backbone network or the Internet; in particular, intermediate network QQ420 may comprise two or more sub-networks (not shown).

The communication system of Figure 10 as a whole enables connectivity between the connected UEs QQ491, QQ492 and host computer QQ430. The connectivity may be described as an over-the-top (OTT) connection QQ450. Host computer QQ430 and the connected UEs QQ491, QQ492 are configured to communicate data and/or signalling via OTT connection QQ450, using access network QQ411, core network QQ414, any intermediate network QQ420 and possible further infrastructure (not shown) as intermediaries. OTT connection QQ450 may be transparent in the sense that the participating communication devices through which OTT connection QQ450 passes are unaware of routing of uplink and downlink communications. For example, base station QQ412 may not or need not be informed about the past routing of an incoming downlink communication with data originating from host computer QQ430 to be forwarded (e.g., handed over) to a connected UE QQ491. Similarly, base station QQ412 need not be aware of the future routing of an outgoing uplink communication originating from the UE QQ491 towards the host computer QQ430.

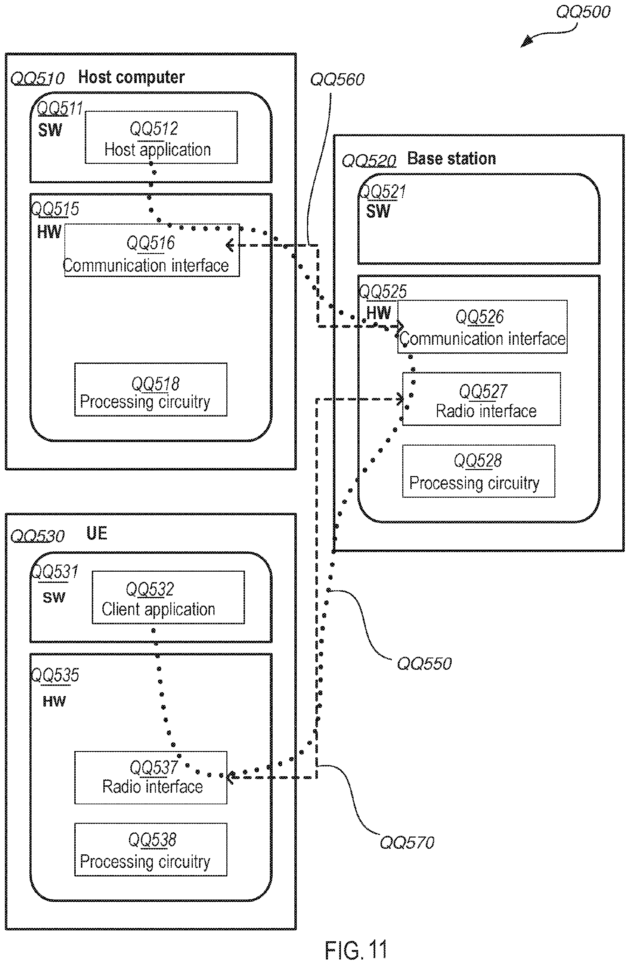

**Figure 11****:** Host computer communicating via a base station with a user equipment over a partially wireless connection in accordance with some embodiments

Example implementations, in accordance with an embodiment, of the UE, base station and host computer discussed in the preceding paragraphs will now be described with reference to Figure 11. In communication system QQ500, host computer QQ510 comprises hardware QQ515 including communication interface QQ516 configured to set up and maintain a wired or wireless connection with an interface of a different communication device of communication system QQ500. Host computer QQ510 further comprises processing circuitry QQ518, which may have storage and/or processing capabilities. In particular, processing circuitry QQ518 may comprise one or more programmable processors, application-specific integrated circuits, field programmable gate arrays or combinations of these (not shown) adapted to execute instructions. Host computer QQ510 further comprises software QQ511, which is stored in or accessible by host computer QQ510 and executable by processing circuitry QQ518. Software QQ511 includes host application QQ512. Host application QQ512 may be operable to provide a service to a remote user, such as UE QQ530 connecting via OTT connection QQ550 terminating at UE QQ530 and host computer QQ510. In providing the service to the remote user, host application QQ512 may provide user data which is transmitted using OTT connection QQ550.

Communication system QQ500 further includes base station QQ520 provided in a telecommunication system and comprising hardware QQ525 enabling it to communicate with host computer QQ510 and with UE QQ530. Hardware QQ525 may include communication interface QQ526 for setting up and maintaining a wired or wireless connection with an interface of a different communication device of communication system QQ500, as well as radio interface QQ527 for setting up and maintaining at least wireless connection QQ570 with UE QQ530 located in a coverage area (not shown in Figure 11) served by base station QQ520. Communication interface QQ526 may be configured to facilitate connection QQ560 to host computer QQ510. Connection QQ560 may be direct or it may pass through a core network (not shown in Figure 11) of the telecommunication system and/or through one or more intermediate networks outside the telecommunication system. In the embodiment shown, hardware QQ525 of base station QQ520 further includes processing circuitry QQ528, which may comprise one or more programmable processors, application-specific integrated circuits, field programmable gate arrays or combinations of these (not shown) adapted to execute instructions. Base station QQ520 further has software QQ521 stored internally or accessible via an external connection.

Communication system QQ500 further includes UE QQ530 already referred to. It's hardware QQ535 may include radio interface QQ537 configured to set up and maintain wireless connection QQ570 with a base station serving a coverage area in which UE QQ530 is currently located. Hardware QQ535 of UE QQ530 further includes processing circuitry QQ538, which may comprise one or more programmable processors, application-specific integrated circuits, field programmable gate arrays or combinations of these (not shown) adapted to execute instructions. UE QQ530 further comprises software QQ531, which is stored in or accessible by UE QQ530 and executable by processing circuitry QQ538. Software QQ531 includes client application QQ532. Client application QQ532 may be operable to provide a service to a human or non-human user via UE QQ530, with the support of host computer QQ510. In host computer QQ510, an executing host application QQ512 may communicate with the executing client application QQ532 via OTT connection QQ550 terminating at UE QQ530 and host computer QQ510. In providing the service to the user, client application QQ532 may receive request data from host application QQ512 and provide user data in response to the request data. OTT connection QQ550 may transfer both the request data and the user data. Client application QQ532 may interact with the user to generate the user data that it provides.

It is noted that host computer QQ510, base station QQ520 and UE QQ530 illustrated in Figure 11 may be similar or identical to host computer QQ430, one of base stations QQ412a, QQ412b, QQ412c and one of UEs QQ491, QQ492 of Figure 10, respectively. This is to say, the inner workings of these entities may be as shown in Figure 11 and independently, the surrounding network topology may be that of Figure 10.

In Figure 11, OTT connection QQ550 has been drawn abstractly to illustrate the communication between host computer QQ510 and UE QQ530 via base station QQ520, without explicit reference to any intermediary devices and the precise routing of messages via these devices. Network infrastructure may determine the routing, which it may be configured to hide from UE QQ530 or from the service provider operating host computer QQ510, or both. While OTT connection QQ550 is active, the network infrastructure may further take decisions by which it dynamically changes the routing (e.g., on the basis of load balancing consideration or reconfiguration of the network).

Wireless connection QQ570 between UE QQ530 and base station QQ520 is in accordance with the teachings of the embodiments described throughout this disclosure. One or more of the various embodiments improve the performance of OTT services provided to UE QQ530 using OTT connection QQ550, in which wireless connection QQ570 forms the last segment. More precisely, the teachings of these embodiments may improve the latency since signalling is reduced and initiated earlier towards the UE and thereby provide benefits such as reduced waiting time and better responsiveness.

A measurement procedure may be provided for the purpose of monitoring data rate, latency and other factors on which the one or more embodiments improve. There may further be an optional network functionality for reconfiguring OTT connection QQ550 between host computer 00510 and UE QQ530, in response to variations in the measurement results. The measurement procedure and/or the network functionality for reconfiguring OTT connection QQ550 may be implemented in software QQ511 and hardware QQ515 of host computer QQ510 or in software QQ531 and hardware QQ535 of UE QQ530, or both. In embodiments, sensors (not shown) may be deployed in or in association with communication devices through which OTT connection QQ550 passes; the sensors may participate in the measurement procedure by supplying values of the monitored quantities exemplified above, or supplying values of other physical quantities from which software QQ511, QQ531 may compute or estimate the monitored quantities. The reconfiguring of OTT connection QQ550 may include message format, retransmission settings, preferred routing etc.; the reconfiguring need not affect base station QQ520, and it may be unknown or imperceptible to base station QQ520. Such procedures and functionalities may be known and practiced in the art. In certain embodiments, measurements may involve proprietary UE signalling facilitating host computer QQ510's measurements of throughput, propagation times, latency and the like. The measurements may be implemented in that software QQ511 and QQ531 causes messages to be transmitted, in particular empty or 'dummy' messages, using OTT connection QQ550 while it monitors propagation times, errors etc.

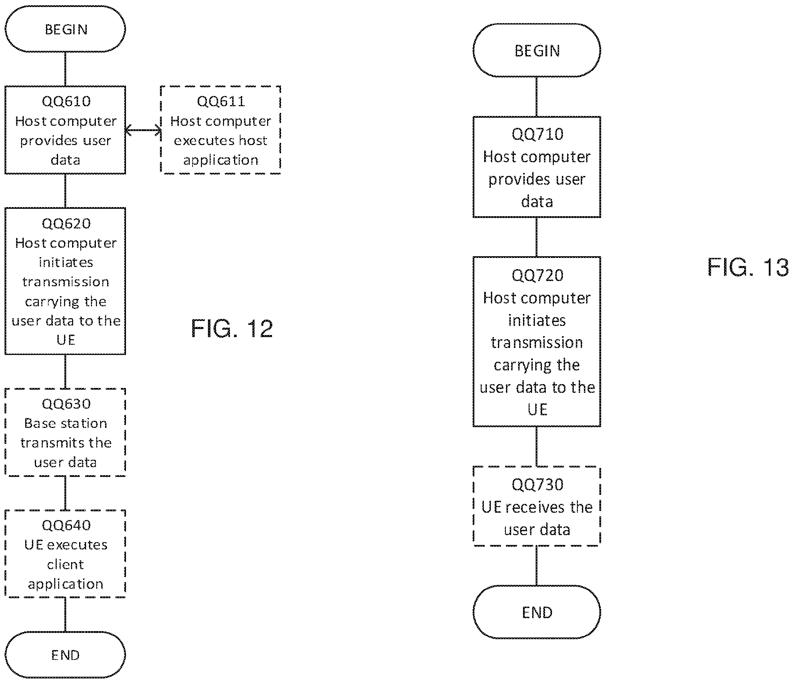

**Figure 12**: Methods implemented in a communication system including a host computer, a base station and a user equipment in accordance with some embodiments.

Figure 12 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 12 will be included in this section. In step QQ610, the host computer provides user data. In substep QQ611 (which may be optional) of step QQ610, the host computer provides the user data by executing a host application. In step QQ620, the host computer initiates a transmission carrying the user data to the UE. In step QQ630 (which may be optional), the base station transmits to the UE the user data which was carried in the transmission that the host computer initiated, in accordance with the teachings of the embodiments described throughout this disclosure. In step QQ640 (which may also be optional), the UE executes a client application associated with the host application executed by the host computer.

**Figure 13****:** Methods implemented in a communication system including a host computer, a base station and a user equipment in accordance with some embodiments.

Figure 13 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 13 will be included in this section. In step QQ710 of the method, the host computer provides user data. In an optional substep (not shown) the host computer provides the user data by executing a host application. In step QQ720, the host computer initiates a transmission carrying the user data to the UE. The transmission may pass via the base station, in accordance with the teachings of the embodiments described throughout this disclosure. In step QQ730 (which may be optional), the UE receives the user data carried in the transmission.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

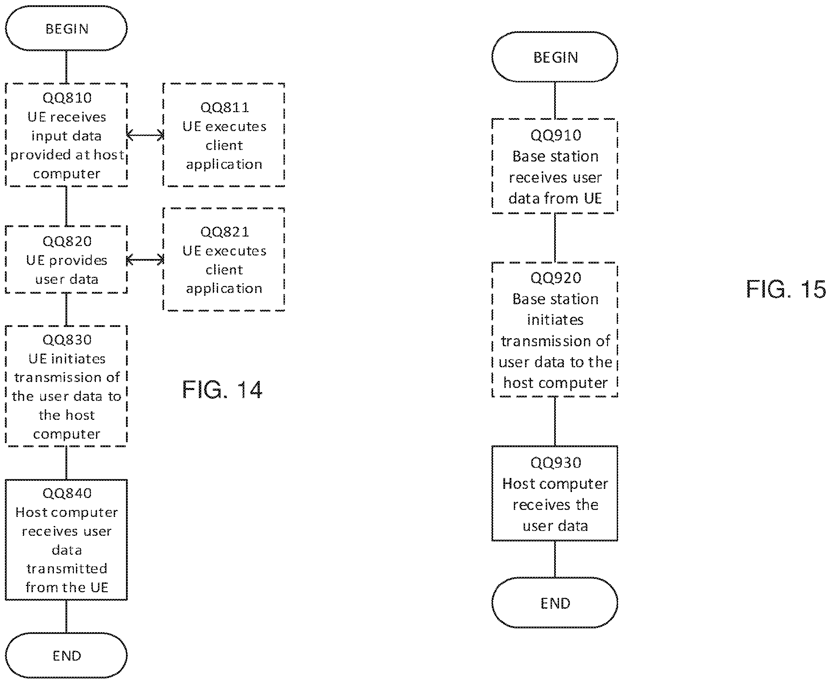

**Figure 14****:** Methods implemented in a communication system including a host computer, a base station and a user equipment in accordance with some embodiments

Figure 14 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 14 will be included in this section. In step QQ810 (which may be optional), the UE receives input data provided by the host computer. Additionally or alternatively, in step QQ820, the UE provides user data. In substep QQ821 (which may be optional) of step QQ820, the UE provides the user data by executing a client application. In substep QQ811 (which may be optional) of step QQ810, the UE executes a client application which provides the user data in reaction to the received input data provided by the host computer. In providing the user data, the executed client application may further consider user input received from the user. Regardless of the specific manner in which the user data was provided, the UE initiates, in substep QQ830 (which may be optional), transmission of the user data to the host computer. In step QQ840 of the method, the host computer receives the user data transmitted from the UE, in accordance with the teachings of the embodiments described throughout this disclosure.

**Figure 15****:** Methods implemented in a communication system including a host computer, a base station and a user equipment in accordance with some embodiments

Figure 15 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 15 will be included in this section. In step QQ910 (which may be optional), in accordance with the teachings of the embodiments described throughout this disclosure, the base station receives user data from the UE. In step QQ920 (which may be optional), the base station initiates transmission of the received user data to the host computer. In step QQ930 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As will be readily understood by those familiar with communications design, that functions means or modules may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a radio network node or UE, for example.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims.

## Claims

1. A method performed by a network node for handling communication of a user equipment, UE, in a wireless communication network, the method comprising:
- *transmitting* (501) to a radio network node (12), a first message for setting up context of the UE, wherein the first message comprises a request indicator, and wherein the request indicator requests a voice match response from the radio network node (12) indicating whether voice over packet switched is supported or not by the UE (10) and/or the radio network node (12); and
- *receiving* (502) from the radio network node (12), in response to the first message, a second message for indicating a capability of the UE (10), wherein the second message comprises a support indication indicating whether voice over packet switched is supported or not by the UE (10) and/or the radio network node (12).

2. The method according to claim 1, wherein the support indication is a level indication defining different levels of voice call and/or emergency call support.

3. The method according to any of the claims 1-2, wherein the support indication is a voice support match indicator and the second message is a UE capability info indication message.

4. The method according to any of the claims 1-3, wherein the request indicator is a voice match request indication and the first message is an initial context setup request message further comprising an IP multimedia subsystem, IMS, voice over packet switched supported indication.

5. The method according to any of the claims 1-4, wherein the request indicator is piggybacked to the first message and/or the support indication is piggybacked to the second message.

6. The method according to any of the claims 1-5, further comprising
- *sending* (503) a third message to the UE (10) with an updated indication, wherein the updated indication indicates whether communication supports voice over packet switched or not, determined based on the received support indication.

7. A method performed by a radio network node (12) for handling communication of a user equipment, UE, in a wireless communication network, the method comprising:
- *receiving* (601) from a network node (13), a first message for setting up context of the UE (10), wherein the first message comprises a request indicator, and wherein the request indicator requests a voice match response from the radio network node (12) indicating whether voice over packet switched is supported or not by the UE (10) and/or the radio network node (12); and
- *transmitting* (603) to the network node (13), in response to the first message, a second message for indicating a capability of the UE (10), wherein the second message comprises a support indication indicating whether voice over packet switched is supported or not by the UE (10) and/or the radio network node (12).

8. The method according to claim 7, wherein the support indication is a level indication defining different levels of voice call and/or emergency call support.

9. The method according to any of the claims 7-8, wherein the support indication is a voice support match indicator and the second message is a UE capability info indication message.

10. The method according to any of the claims 7-9, wherein the request indicator is a voice match request indication and the first message is an initial context setup request message further comprising an IP multimedia subsystem, IMS, voice over packet switched supported indication.

11. The method according to any of the claims 7-10, wherein the request indicator is piggybacked to the first message and/or the support indication is piggybacked to the second message.

12. The method according to any of the claims 7-11, further comprising
- *obtaining* (604) a third message intended for the UE (10) with an updated indication, wherein the updated indication indicates whether communication supports voice over packet switched or not.

13. The method according to any of the claims 7-12, further comprising
- *obtaining* (602) a capability of the UE from the UE, wherein the obtained capability and a capability of the radio network node is taken into account when setting the support indication in the second message.

14. A network node (13) for handling communication of a user equipment, UE, in a wireless communication network, wherein the network node is configured to:
transmit to a radio network node (12), a first message for setting up context of the UE, wherein the first message comprises a request indicator, and wherein the request indicator requests a voice match response from the radio network node (12) indicating whether voice over packet switched is supported or not by the UE (10) and/or the radio network node (12); and
receive from the radio network node (12), in response to the first message, a second message for indicating a capability of the UE (10), wherein the second message comprises a support indication indicating whether voice over packet switched is supported or not by the UE (10) and/or the radio network node (12).

15. A radio network node (12) for handling communication of a user equipment, UE, in a wireless communication network, wherein the radio network node is configured to:
receive from a network node (13), a first message for setting up context of the UE (10), wherein the first message comprises a request indicator, and wherein the request indicator requests a voice match response from the radio network node (12) indicating whether voice over packet switched is supported or not by the UE (10) and/or the radio network node (12); and
transmit to the network node (13), in response to the first message, a second message for indicating a capability of the UE (10), wherein the second message comprises a support indication indicating whether voice over packet switched is supported or not by the UE (10) and/or the radio network node (12).

## Patentansprüche

1. Verfahren, das von einem Netzwerkknoten durchgeführt wird, zur Abwicklung von Kommunikation einer Benutzerausrüstung, UE, in einem Drahtloskommunikationsnetzwerk, wobei das Verfahren umfasst:
- *Übertragen* (501) einer ersten Nachricht zum Einrichten von Kontext der UE an einen Funknetzwerkknoten (12), wobei die erste Nachricht einen Anforderungsindikator umfasst und wobei der Anforderungsindikator eine Sprachübereinstimmungsantwort vom Funknetzwerkknoten (12) anfordert, die anzeigt, ob paketvermittelte Sprache von der UE (10) und/oder dem Funknetzwerkknoten (12) unterstützt wird oder nicht; und
- *Empfangen* (502), in Antwort auf die erste Nachricht, einer zweiten Nachricht vom Funknetzwerkknoten (12) zum Anzeigen einer Fähigkeit der UE (10), wobei die zweite Nachricht eine Unterstützungsanzeige umfasst, die anzeigt, ob paketvermittelte Sprache von der UE (10) und/oder dem Funknetzwerkknoten (12) unterstützt wird oder nicht.

2. Verfahren nach Anspruch 1, wobei die Unterstützungsanzeige eine Ebenenanzeige ist, die verschiedene Ebenen von Sprachanruf- und/oder Notrufunterstützung definiert.

3. Verfahren nach einem der Ansprüche 1-2, wobei die Unterstützungsanzeige ein Sprachunterstützungsübereinstimmungsindikator ist und die zweite Nachricht eine UE-Fähigkeitsinfoanzeigenachricht ist.

4. Verfahren nach einem der Ansprüche 1-3, wobei der Anforderungsindikator eine Sprachübereinstimmungsanforderungsanzeige ist und die erste Nachricht eine Erstkontexteinrichtungsanforderungsnachricht ist, die weiter eine IP-Multimedia-Subsystem-, IMS-, Unterstützungsanzeige für paketvermittelte Sprache umfasst.

5. Verfahren nach einem der Ansprüche 1-4, wobei der Anforderungsindikator huckepack auf der ersten Nachricht und/oder die Unterstützungsanzeige huckepack auf der zweiten Nachricht übertragen wird.

6. Verfahren nach einem der Ansprüche 1-5, weiter umfassend
- *Senden* (503) einer dritten Nachricht mit einer aktualisierten Anzeige an die UE (10), wobei die aktualisierte Anzeige auf Basis der empfangenen Unterstützungsanzeige bestimmt anzeigt, ob die Kommunikation paketvermittelte Sprache unterstützt oder nicht.

7. Verfahren, das von einem Funknetzwerkknoten (12) durchgeführt wird, zur Abwicklung von Kommunikation einer Benutzerausrüstung, UE, in einem Drahtloskommunikationsnetzwerk, wobei das Verfahren umfasst:
- *Empfangen* (601) einer ersten Nachricht zum Einrichten von Kontext der UE (10) von einem Netzwerkknoten (13), wobei die erste Nachricht einen Anforderungsindikator umfasst und wobei der Anforderungsindikator eine Sprachübereinstimmungsantwort vom Funknetzwerkknoten (12) anfordert, die anzeigt, ob paketvermittelte Sprache von der UE (10) und/oder dem Funknetzwerkknoten (12) unterstützt wird oder nicht; und
- *Übertragen* (603), in Antwort auf die erste Nachricht, einer zweiten Nachricht an den Netzwerkknoten (13) zum Anzeigen einer Fähigkeit der UE (10), wobei die zweite Nachricht eine Unterstützungsanzeige umfasst, die anzeigt, ob paketvermittelte Sprache von der UE (10) und/oder dem Funknetzwerkknoten (12) unterstützt wird oder nicht.

8. Verfahren nach Anspruch 7, wobei die Unterstützungsanzeige eine Ebenenanzeige ist, die verschiedene Ebenen von Sprachanruf- und/oder Notrufunterstützung definiert.

9. Verfahren nach einem der Ansprüche 7-8, wobei die Unterstützungsanzeige ein Sprachunterstützungsübereinstimmungsindikator ist und die zweite Nachricht eine UE-Fähigkeitsinfoanzeigenachricht ist.

10. Verfahren nach einem der Ansprüche 7-9, wobei der Anforderungsindikator eine Sprachübereinstimmungsanforderungsanzeige ist und die erste Nachricht eine Erstkontexteinrichtungsanforderungsnachricht ist, die weiter eine IP-Multimedia-Subsystem-, IMS-, Unterstützungsanzeige für paketvermittelte Sprache umfasst.

11. Verfahren nach einem der Ansprüche 7-10, wobei der Anforderungsindikator huckepack auf der ersten Nachricht und/oder die Unterstützungsanzeige huckepack auf der zweiten Nachricht übertragen wird.

12. Verfahren nach einem der Ansprüche 7-11, weiter umfassend
- *Erhalten* (604) einer dritten Nachricht mit einer aktualisierten Anzeige, die für die UE (10) gedacht ist, wobei die aktualisierte Anzeige anzeigt, ob die Kommunikation paketvermittelte Sprache unterstützt oder nicht.

13. Verfahren nach einem der Ansprüche 7-12, weiter umfassend
- *Erhalten* (602) einer Fähigkeit der UE von der UE, wobei die erhaltene Fähigkeit und eine Fähigkeit des Funknetzwerkknotens beim Einstellen der Unterstützungsanzeige in der zweiten Nachricht berücksichtigt werden.

14. Netzwerkknoten (13) zur Abwicklung von Kommunikation einer Benutzerausrüstung, UE, in einem Drahtloskommunikationsnetzwerk, wobei der Netzwerkknoten so konfiguriert ist, dass er:
eine erste Nachricht zum Einrichten von Kontext der UE an einen Funknetzwerkknoten (12) überträgt, wobei die erste Nachricht einen Anforderungsindikator umfasst und wobei der Anforderungsindikator eine Sprachübereinstimmungsantwort vom Funknetzwerkknoten (12) anfordert, die anzeigt, ob paketvermittelte Sprache von der UE (10) und/oder dem Funknetzwerkknoten (12) unterstützt wird oder nicht; und
vom Funknetzwerkknoten (12) in Antwort auf die erste Nachricht eine zweite Nachricht zum Anzeigen einer Fähigkeit der UE (10) empfängt, wobei die zweite Nachricht eine Unterstützungsanzeige umfasst, die anzeigt, ob paketvermittelte Sprache von der UE (10) und/oder dem Funknetzwerkknoten (12) unterstützt wird oder nicht.

15. Funknetzwerkknoten (12) zur Abwicklung von Kommunikation einer Benutzerausrüstung, UE, in einem Drahtloskommunikationsnetzwerk, wobei der Funknetzwerkknoten so konfiguriert ist, dass er:
von einem Netzwerkknoten (13) eine erste Nachricht zum Einrichten von Kontext der UE (10) empfängt, wobei die erste Nachricht einen Anforderungsindikator umfasst und wobei der Anforderungsindikator eine Sprachübereinstimmungsantwort vom Funknetzwerkknoten (12) anfordert, die anzeigt, ob paketvermittelte Sprache von der UE (10) und/oder dem Funknetzwerkknoten (12) unterstützt wird oder nicht; und
in Antwort auf die erste Nachricht eine zweite Nachricht zum Anzeigen einer Fähigkeit der UE (10) an den Netzwerkknoten (13) überträgt, wobei die zweite Nachricht eine Unterstützungsanzeige umfasst, die anzeigt, ob paketvermittelte Sprache von der UE (10) und/oder dem Funknetzwerkknoten (12) unterstützt wird oder nicht.

## Revendications

1. Procédé réalisé par un noeud de réseau pour gérer une communication d'un équipement utilisateur, UE, dans un réseau de communication sans fil, le procédé comprenant :
- *la transmission* (501), à un noeud de réseau radio (12), d'un premier message pour établir un contexte de l'équipement UE, dans lequel le premier message comprend un indicateur de demande et dans lequel l'indicateur de demande demande une réponse de correspondance vocale en provenance du noeud de réseau radio (12) indiquant si la voix sur commutation de paquets est prise, ou non, en charge par l'équipement UE (10) et/ou le noeud de réseau radio (12) ; et
- *la réception* (502), en provenance du noeud de réseau radio (12), en réponse au premier message, d'un deuxième message pour indiquer une capacité de l'équipement UE (10), dans lequel le deuxième message comprend une indication de prise en charge indiquant si la voix sur commutation de paquets est, ou non, prise en charge par l'équipement UE (10) et/ou le noeud de réseau radio (12).

2. Procédé selon la revendication 1, dans lequel l'indication de prise en charge est une indication de niveau définissant différents niveaux de prise en charge d'appel vocal et/ou d'appel d'urgence.

3. Procédé selon l'une quelconque des revendications 1-2, dans lequel l'indication de prise en charge est un indicateur de correspondance de prise en charge vocale et le deuxième message est un message d'indication d'informations de capacité d'équipement UE.

4. Procédé selon l'une quelconque des revendications 1-3, dans lequel l'indicateur de demande est une indication de demande de correspondance vocale et le premier message est un message de demande de configuration de contexte initial comprenant en outre une indication prise en charge de voix sur commutation de paquets de sous-système multimédia IP, IMS.

5. Procédé selon l'une quelconque des revendications 1-4, dans lequel l'indicateur de demande est superposé au premier message et/ou l'indication de prise en charge est superposée au deuxième message.

6. Procédé selon l'une quelconque des revendications 1-5, comprenant en outre :
- *l'envoi* (503) d'un troisième message à l'équipement UE (10) avec une indication mise à jour, dans lequel l'indication mise à jour indique si la communication prend, ou non, en charge la voix sur commutation de paquets déterminée sur la base de l'indication de prise en charge reçue.

7. Procédé exécuté par un noeud de réseau radio (12) pour gérer une communication d'un équipement utilisateur, UE, dans un réseau de communication sans fil, le procédé comprenant :
- *la réception* (601), en provenance d'un noeud de réseau (13), d'un premier message pour établir un contexte de l'équipement UE (10), dans lequel le premier message comprend un indicateur de demande, et dans lequel l'indicateur de demande demande une réponse de correspondance vocale en provenance du noeud de réseau radio (12) indiquant si la voix sur commutation de paquets est, ou non, prise en charge par l'équipement UE (10) et/ou le noeud de réseau radio (12) ; et
- *la transmission* (603) au noeud de réseau (13), en réponse au premier message, d'un deuxième message pour indiquer une capacité de l'équipement UE (10), dans lequel le deuxième message comprend une indication de prise en charge indiquant si la voix sur commutation de paquets est, ou non, prise en charge par l'équipement UE (10) et/ou le noeud de réseau radio (12).

8. Procédé selon la revendication 7, dans lequel l'indication de prise en charge est une indication de niveau définissant différents niveaux de prise en charge d'appel vocal et/ou d'appel d'urgence.

9. Procédé selon l'une quelconque des revendications 7-8, dans lequel l'indication de prise en charge est un indicateur de correspondance de prise en charge vocale et le deuxième message est un message d'indication d'informations de capacité d'équipement UE.

10. Procédé selon l'une quelconque des revendications 7-9, dans lequel l'indicateur de demande est une indication de demande de correspondance vocale et le premier message est un message de demande de configuration de contexte initial comprenant en outre une indication de prise en charge de voix sur commutation de paquets de sous-système multimédia IP, IMS.

11. Procédé selon l'une quelconque des revendications 7-10, dans lequel l'indicateur de demande est superposé au premier message et/ou l'indication de prise en charge est superposée au deuxième message.

12. Procédé selon l'une quelconque des revendications 7-11, comprenant en outre :
- *l'obtention* (604) d'un troisième message destiné à l'équipement UE (10) avec une indication mise à jour, dans lequel l'indication mise à jour indique si la communication prend, ou non, en charge la voix sur commutation de paquets.

13. Procédé selon l'une quelconque des revendications 7-12, comprenant en outre :
- *l'obtention* (602) d'une capacité de l'équipement UE à partir de l'équipement UE, dans lequel la capacité obtenue et une capacité du noeud de réseau radio sont prises en compte lors de la définition de l'indication de prise en charge dans le deuxième message.

14. Noeud de réseau (13) pour gérer une communication d'un équipement utilisateur, UE, dans un réseau de communication sans fil, dans lequel le noeud de réseau est configuré pour :
transmettre, à un noeud de réseau radio (12), un premier message pour établir le contexte de l'équipement UE, dans lequel le premier message comprend un indicateur de demande et dans lequel l'indicateur de demande demande une réponse de correspondance vocale en provenance du noeud de réseau radio (12) indiquant si la voix sur commutation de paquets est, ou non, prise en charge par l'équipement UE (10) et/ou le noeud de réseau radio (12) ; et
recevoir, du noeud de réseau radio (12), en réponse au premier message, un deuxième message pour indiquer une capacité de l'équipement UE (10), dans lequel le deuxième message comprend une indication de prise en charge indiquant si la voix sur commutation de paquets est, ou non, prise en charge par l'équipement UE (10) et/ou le noeud de réseau radio (12).

15. Noeud de réseau radio (12) pour gérer une communication d'un équipement utilisateur, UE, dans un réseau de communication sans fil, dans lequel le noeud de réseau radio est configuré pour :
recevoir, d'un noeud de réseau (13), un premier message pour établir le contexte de l'équipement UE (10), dans lequel le premier message comprend un indicateur de demande et dans lequel l'indicateur de demande demande une réponse de correspondance vocale en provenance du noeud de réseau radio (12) indiquant si la voix sur commutation de paquets est, ou non, prise en charge par l'équipement UE (10) et/ou le noeud de réseau radio (12) ; et
transmettre, au noeud de réseau (13), en réponse au premier message, un deuxième message pour indiquer une capacité de l'équipement UE (10), dans lequel le deuxième message comprend une indication de prise en charge indiquant si la voix sur commutation de paquets est, ou non, prise en charge par l'équipement UE (10) et/ou le noeud de réseau radio (12).
